(19) Europäisches Patentamt
European Patent Office
Office européen des brevets

(11) **EP 4 170 480 B1**

(12) **EUROPEAN PATENT SPECIFICATION**

(45) Date of publication and mention of the grant of the patent:
**12.06.2024 Bulletin 2024/24**

(21) Application number: **21203708.9**

(22) Date of filing: **20.10.2021**

(51) International Patent Classification (IPC):
***G06F 7/58*** (2006.01)

(52) Cooperative Patent Classification (CPC):
**G06F 7/588**

(54) **METHOD AND DEVICE FOR QUANTUM RANDOM NUMBER GENERATION**

VERFAHREN UND VORRICHTUNG ZUR QUANTENZUFALLSZAHLERZEUGUNG

PROCÉDÉ ET DISPOSITIF DE GÉNÉRATION DE NOMBRE QUANTIQUE ALÉATOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.04.2023 Bulletin 2023/17**

(73) Proprietor: **Université de Genève**
**1211 Genève (CH)**

(72) Inventors:
• **ZBINDEN, Hugo**
**1201 Geneva (CH)**
• **RUSCA, Davide**
**1213 lancy (IT)**
• **BRUNNER, Nicolas**
**1203 Geneva (CH)**

(74) Representative: **KATZAROV S.A.**
**Geneva Business Center**
**12 Avenue des Morgines**
**1213 Petit-Lancy (CH)**

(56) References cited:
**US-A1- 2019 243 611**

• **FRANCESCO REGAZZONI ET AL: "A High Speed Integrated Quantum Random Number Generator with on-Chip Real-Time Randomness Extraction", ARXIV.ORG, CORNELL UNIVERSITY LIBRARY, 201 OLIN LIBRARY CORNELL UNIVERSITY ITHACA, NY 14853, 11 February 2021 (2021-02-11), XP081881512,**

## Description

### Technical field

The present invention pertains to a device and method for generating quantum random numbers, which offers the possibility to precisely quantify the amount of entropy of a raw output stream due to the quantum nature of the process in an improved manner.

### Background of the art

In general, the present invention is in the context of the generation of random numbers. Many tasks in modern science and technology make use of random numbers, including simulation, statistical sampling, gaming applications, and cryptography, both classical and quantum. A good random number generator should produce a chain of bits with high entropy at a high rate. By high entropy, it is meant that nobody can predict the value of the bit before the bit is revealed, entropy can also be understood as randomness. This is an essential requirement in most of the modern methods of data encryption. Indeed, all the cryptography protocols commonly employed, such as DSA-, RSA- and Diffie-Hellman-algorithms, follow Kerckhoffs' principle, which dates back to the 19th century, and states that the security of a cypher must reside entirely in the key, i.e. in the random sequence used as seed. It is therefore of particular importance that the key used in a cryptographic algorithm is secure, which in practice requires it to be chosen perfectly at random, i.e. randomly generated.

Currently, most random keys are generated by arithmetic approaches and are thus only pseudo-random. In this context, most recent breaches of cryptography protocols have exploited random-number-generator weaknesses, such as reported by A.K. Lenstra, and co-authors in their article "Ron was wrong, whit is right" in Cryptology ePrint Archive,2012. Such attacks can happen in many different fields including operating system security (see the article "Cryptanalysis of the random number generator of the windows operating system" by L. Dorrendorf, Z. Gutterman, and B. Pinkas published in ACM Trans. Inf. Syst. Secur., 13(1):1-32, 2009), communication protocols (see "openssl - predictable random number generator" by L.Bello published in Debian security advisory 1571-1, 2008), digital rights management (see the publication "Ps3 epic fail" by Bushing, Marcan, Segher, and Sven at the 27th Chaos Communication Congress, 2010), and financial systems (see "Android bug batters bitcoin wallets" by R. Chirgwin in The Register, 2013).

Pseudo random number generation can be used advantageously for some applications such as numerical simulation, making results reproducible, but limitations need to be taken into account. For other applications, however, different methods need to be employed to avoid loopholes. For this reason, random number generators based on physical systems were developed, which in principle ensure the uniqueness and, most importantly, the randomness of the generated bit string. Example are given by C. H. Vincent in "The generation of truly random binary numbers", Journal of Physics E: Scientific Instruments, 3(8):594, 1970, Y. Saitoh, J. Hori, and T. Kiryu, in "Generation of physical random number using frequency-modulated oscillation circuit with shot noise", Electron Comm. Jpn. 3, 88(5):12-19, 2005. These types of random number generators use physical processes, which are ruled by deterministic laws but cannot be easily predicted due to the complexity and incomplete knowledge of the initial system state. We call this type of random number generators, chaotic random number generators. This random number generator type is now commonly used, notably it is implemented in Intel processors, see "Analysis of Intel's IVY bridge digital random number generator", by M. Hamburg, P. Kocher and M.E. Marson in Cryptography research Inc. Other examples of this kind of physical random number generators are disclosed in US 6,831,980, US 6,215,874, WO2013/003943, EP 1 821 196, WO01/95091. The security of these generators crucially relies on the fact that nobody has enough information to predict the behavior of the physical system or influence it.

Another implementation consists in using physical processes, which feature fundamental genuine randomness, such as quantum mechanical processes. This type of generators is called quantum random number generators (QRNGs). With this type of generator, a perfect knowledge of the system is in general insufficient to allow one to predict the bits that will be generated, as explained in more details in the article "Quantum random-number generation and key sharing" by J. G. Rarity, P. C. M. Owens, and P. R. Tapster, J.Mod.Opt., 41(12):2435-2444, 1994. Known QRNGs are based on specialized hardware, such as single-photon sources and detectors as described by A. Stefanov, N. Gisin, O. Guinnard, L. Guinnard, and H. Zbinden in their article "Optical quantum random number generator", J.Mod.Opt., 47(4), 595-598, 2000, photon pair sources in combination with beam splitters such as disclosed by W. Dultz and E. Hildebrandt in their patent US 6,393,448, 2002 entitled "Optical random-number generator based on single-photon statistics at the optical beam splitter", the device proposed by W. Wei and H. Guo in the article "Bias-free true random-number generator", Opt. Letters, 34(12):1876-1878, 2009, or homodyne detection as proposed for example by C. Gabriel, and co-authors in "A generator for unique quantum random numbers based on vacuum states", Nature Phot., 4(10):711-715, 2010. Other examples of such kind of physical random number generators are disclosed in patents US 7,284,024, US 2012/045053, JP 2009/070009, EP 2 592 547, GB 2 473 078, and WO02/091147.

However, while these quantum random number generators can, in theory, generate perfect randomness and therefore high entropy; in practice, their implementation is prone to loopholes due to unavoidable technical imperfections of the devices that inherently generate technical noise. In this configuration, the main difficulty consists in estimating the entropy generated by a quantum process, and separating it from the entropy due to technical noise (such as thermal noise or the like). This requires a precise theoretical modeling of the device, which is usually difficult to establish and analyze because modeling is inherently based on theoretical assumptions in the equations, which are not exactly representing the reality. A further limitation comes from the fact that the properties of the device may change during its lifetime. In particular, if the device malfunctions, or even breaks, low quality randomness is generated without the user being aware of it. Therefore, it is valuable to have a real-time evaluation of the entropy contained in bit streams provided by QRNGs.

Recently, to overcome this issue, the concept of a self-testing quantum random generator was introduced, as discussed in references "Self-Testing Quantum Random Number Generator" T. Lunghi, and co-authors, Phys.Rev.Lett.114, 150501, 2015, and "Source-device-independent Ultra-fast Quantum Random Number Generation", D.G. Marangon, G. Vallone, and P. Villoresi, ePrint arXiv 1509.07390, 2015. With this approach, the user can quantify the generation of genuine quantum random numbers in real-time. Specifically, the amount of quantum entropy generated by the system can be estimated directly from the observed data. In this way, genuine quantum entropy can be separated from entropy due to technical imperfections of the device or malfunctioning due to aging. However, in practice this approach involves complex setups, including electro-optical modulators with multiple state preparation and single photon detectors. Moreover, only low rates in the range of few bits per seconds may be achieved (e.g.: 23 bps in the case of Lungi et al. publication) which suggests limited interest from applications requiring throughput in the range of Mbps (such as cryptography, security, gaming and scientific simulation).

In addition to the above, more recent work are available in publications such as Rusca D, Tebyanian H, Martin AC, Zbinden H. Fast self-testing quantum random number generator based on homodyne detection. Appl Phys Lett 2020;116(264004):1-5, Rusca D, van Himbeeck T, Martin A, Brask JB, Shi W, Pironio S, et al. Self-testing quantum random-number generator based on an energy bound. Physical Review. A 2019;100(062338) and Brask J, Martin A, Esposito W, Houlmann R, Bowles J, Zbinden H, et al. Megahertz-Rate Semi-Device-Independent Quantum Random Number Generators Based on Unambiguous State Discrimination. Physical Review Applied 2017;7(5):054018.

Solutions to this problem have been investigated and were published in for example EP 3306464A1 describing an apparatus and a method precisely quantifying the amount of entropy having a quantum nature in the output thereby a realizing a self-testing quantum random number generator at a high rate and preferably not involving a complex setup. To achieve this, the system realizes a self-testing random number generator based on unambiguous quantum state discrimination.

Most notably, the present approach offered ease of implementation, as it only required standard components that may be implemented in a standalone device, thus providing an integrated system that is far less complex than the existing ones, and having a reduced size and cost. This approach offered also high bit rates in the range of few Mbit/s, sufficient for many applications based on random numbers. Finally, yet importantly, the random bit entropy was computed/monitored in real-time at the contrary of all previous solutions where random bit entropy is estimated during the QRNG conception.

These devices and methods, also called, semi-Device-Independent or Self-Testing QRNG had the big advantage compared to other commercial TRNG or QRNG that only little assumptions had to be made on the proper working of the device to which they were referring. Moreover, one could estimate and certify in real time the generated entropy. As mentioned, the optical part of the device was not much more complicated.

The main problem with these devices is that the extraction part requests extracting a huge number of bits, e.g., in the order of a million, and therefore necessitates a powerful FPGA or GPU when carried out at real time at high rates. Indeed, for good statistics the entropy must be estimated over big block sizes (over $10^5$) and the extraction (using e.g. a Toeplitz matrix) is demanding at high rates (over 10Mb/s).

In addition to this, the ultimate security, as well as bit rates in the range of Mb/s, of self-testing QRNG is not always needed.

There is therefore an increasing demand for Cheaper self-testing QRNG with at the same time higher rates of improved "standard" QRNG.

An object of the present invention is therefore of providing an improved self-testing QRNG system and method permitting to provide an improved randomness/entropy extraction at high rates with low cost FGPA embedded in it.

Summary of the invention

In view of the above, the invention is directed to a device and a method carrying out a hybrid approach where a high speed QRNG generates a raw bit stream at a rate of up to 10 Gb/s and where the entropy is estimated based on a fraction of these bits. More particularly, according to the invention, a big block size (>$10^5$ bits) extractor delivers certified random bits at rate of up to 10 Mb/s and in parallel a fast, small block size extractor (e.g. 512 bits) supplies random bits at rates of up to 1Gb/s. This hybrid approach for extraction can be applied to any self-testing QRNG, independent of his architecture and maximal raw bit rate. It is foreseeable that using integrated photonic chips, the cost of the entropy source itself becomes negligible with respect to the readout electronics and logic.

The invention permits to have with less resources full self-testing certification at reasonable rates, and at the same time a high rate QRNG still with improved quality with respect to a totally device dependent approach.

More particularly, a first aspect of the invention relates to a Quantum Random Number Generator comprising an emitting device adapted to be triggered by a signal representing an input bit x and adapted to generate and send a stream of one of two possible non-orthogonal quantum states determined by a plurality of said input bit x at a rate in the range of Mb/s up to 10 Gb/s, a measurement device adapted to detect each quantum state of the stream of quantum states sent by the emitting device and to generate an output b based on the detected quantum state, a random selection device adapted to receive said output b and carries out a random selection on said output b so as to select and pick out a first fraction of the bits b' and a second fraction of the bit b-b' sent to an entropy $H^Q_{\min}$ estimation module, wherein the entropy $H^Q_{\min}$ estimation module is adapted to receive the input x, the output b' and the output b-b' over a certain number of rounds N and to estimate the entropy $H^Q_{\min}$ of each output for each quantum state of the stream of quantum states, validating or not an extraction ratio, and at least two parallel randomness extraction devices adapted to carry out a hybrid extraction protocol generating two final random output bit strings via a first extractor which extracts the first fraction of the bits b' with bit block sizes in a first range and generates a string of certified random bits r' at a first rate; and a second extractor which extracts the second fraction of the bits b-b' with bit block sizes in a second range, higher than the first range, and generates a string of true random bits r at a second rate, higher than the first rate.

Preferably, the first extractor is a "slow" extractor which extracts the first fraction of the bits b' with block sizes in the range of 10^5-10^7 bits and generates a string of certified random bits r' at a rate in the order of 1 Mb/s; and the second extractor is a "fast" extractor which extracts the second fraction of the bits b-b' with block sizes in the range of $2^8$-$2^{10}$ bits and generating a string of true random bits r at a rate in the order of 100 Mb/s.

According to a preferred embodiment, the measurement device is an unambiguous state discrimination measurement, where the output b represents whether the quantum state has been identified or not and, if it has been identified, which quantum state among the two possible quantum states to a processing device.

Advantageously, the entropy $H^Q_{\min}$ estimation module comprises a first processing device adapted to estimates the entropy $H^Q_{\min}$ of the output b' and a second processing device adapted to estimates the entropy $H^Q_{\min}$ of the output b-b'.

Preferably, the processing devices estimate the probabilities p(b'|x) and r p(b-b'|x) representing the probability of observing output b' and b-b' for a state preparation x and estimates the entropy $H^Q_{\min}$ of the output b' and b-b'.

According to a preferred embodiment, the two possible non-orthogonal quantum states are encoded in one of the temporal mode of photons, the polarization of photons, the frequency mode of photons, the photon number degree of freedom of light, the spatial mode of photons, the path degree of freedom of photons, or the phase of weak coherent pulses.

Advantageously, the two possible non-orthogonal quantum states are encoded using a combination of two or more encodings listed above or using other quantum systems such as atomic systems and superconducting systems.

Preferably, the random selection device carries out the random selection using a pseudorandom number generator.

According to a preferred embodiment, the raw key is 0 if the output b is conclusive or 1 if the output b is inconclusive.

Advantageously, the entropy estimation is made according to $H^Q_{\min} = -\log_2(p_g)$, where the guessing probability $p_g$ can be upper bounded from the probabilities p(b|x) as follows: $p_g = \Sigma_{x,b}\, v_{x,b} p(b|x) + \gamma$, where the parameter $v_{xb}$ and $\gamma$ are obtained via an adapted semi-definite program (SDP).

Preferably, the randomness extraction is realized by a vector-matrix multiplication between a vector formed by the raw bit value generated at the output of the unambiguous quantum state discrimination measurement device and a random matrix M where the dimension is adapted as a function of the quantity of entropy $H^Q_{\min}$ estimated.

A second aspect of the invention relates to a Quantum Key Distribution System comprising at least one Quantum Random Number Generator of the first aspect.

A third aspect of the invention relates to a self-testing method carried out by a Quantum Random Number Generator comprising the steps of: preparing and sending a stream of one of two possible non-orthogonal quantum states determined by a plurality of input bit x at a rate in the range of Mb/s up to 10 Gb/s, detecting and measuring each quantum state of the stream of quantum states sent and generating an output b based on the detected quantum state, carrying out a random selection on the output b so as to select and pick out a first fraction of the bits b' and a second fraction of the bit b-b' sent to an entropy estimation module, estimating the entropy $H^Q_{\min}$ of each the output b' and the output b-b' for each quantum state of the stream of quantum states and validating or not an extraction ratio, and randomness extracting via two parallel randomness extraction procedures adapted to carry out a hybrid extraction protocol generating two final random output bit strings via a first extraction which extracts the first fraction of the bits b' with bit block sizes in a first range and generates a string of certified random bits r' at a first rate; and a second extraction which extracts the second fraction of the bits b-b' with bit block sizes in a second range, higher than the first range, and generates a string of true random bits r at a second rate, higher than the first rate.

Advantageously, the first extraction is a "slow" extraction which extracts the first fraction of the bits b' with block sizes in the range of 10^5-10^7 bits and generates a string of certified random bits r' at a rate in the order of 1 Mb/s; and the second extraction is a "fast" extraction which extracts the second fraction of the bits b-b' with block sizes in the range of $2^8$-$2^{10}$ bits and generating a string of true random bits r at a rate in the order of 100 Mb/s.

Preferably, the preparation device prepares and sends a physical system prepare in any number of non-orthogonal quantum states and the measurement device consists in an adapted unambiguous state discrimination measurement.

Brief description of the drawings

The attached figures illustrate the principles as well as several realizations of the present invention.

- Figure 1 is a schematic representation of the general concept and protocol, relating to the apparatus and the method of the prior art,
- Figure 2 is a detailed method steps associated to the apparatus of the prior art,
- Figure 3 is a schematic representation of the general concept and protocol, relating to the apparatus and the method of the present invention Description of the preferred embodiment of the invention

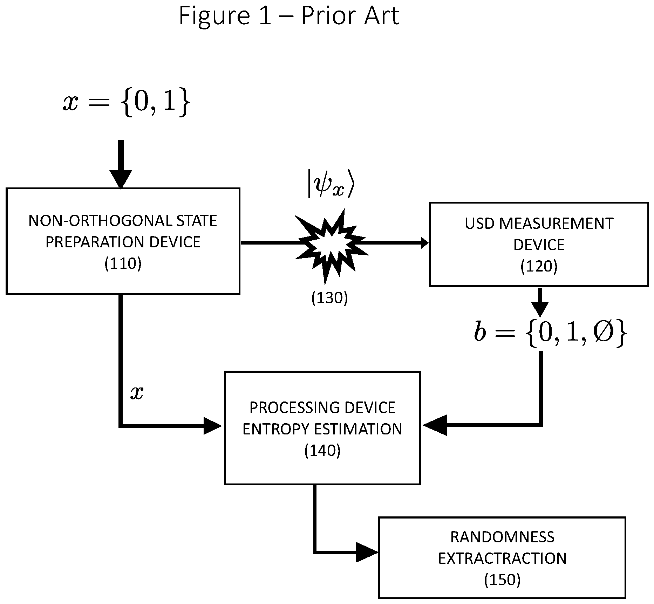

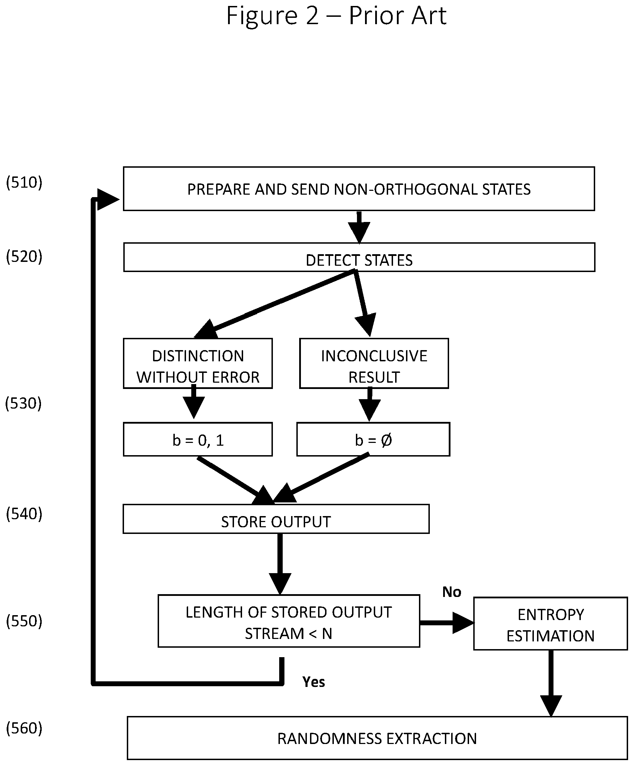

In the following, the invention is described in detail with reference to the above-mentioned figures. Figures 1 and 2 schematically represent the principle of the prior art.

Figure 1 schematically illustrates the principle of the quantum random number generator and its conceptual scheme where a source 110 prepares a physical system 130 in one of two possible non-orthogonal quantum states according to an input bit x and sends it to the measurement device 120. The measurement device 120 performs a quantum measurement to try to determine the received states, preferably an unambiguous state discrimination (USD) measurement, and gives an output b. The output b is either conclusive, indicating which state was prepared by the source, or inconclusive if it does not succeed to discriminate between the two possible states.

More precisely, the setup comprises two devices: a "non-orthogonal state preparation device" 110 and a "USD measurement device" 120, respectively. The "non-orthogonal state preparation device" 110 sends a physical system, prepared in one out of two possible quantum states, to the "USD measurement device" 120. The "USD measurement device" 120 attempts to identify which state was sent. Thus, it implements a quantum measurement able to distinguish between the two quantum states. The setup permits to identify which state is being sent with as little error as possible. If the two states are non-orthogonal, i.e. with a non-zero overlap, it is impossible, according to the laws of quantum theory, to continuously discriminate them with certainty. Nevertheless, probabilistically it is possible to perfectly discriminate them. This means that it is possible to distinguish them without error, i.e. the measurement device never outputs 'b=1' when the state was 'x=0' and vice versa, at the price of sometimes outputting an inconclusive result 'b = Ø'.

The entropy of the output bits is quantified by verifying that the measurement distinguishes the two states without error. Therefore, based on a promise on how non-orthogonal the states are (i.e. what their overlap is), it is possible to estimate the entropy contained in the output data in real time 140. Then, based on this entropy estimate, a final string of random bits is generated via an adapted procedure of randomness extraction 150.

Figure 2 is a detailed description of the method associated to the prior art apparatus presented in Figure 1. The first step 510 consists in preparing and sending one out of two possible non-orthogonal states $|\psi_x\rangle$. In a second step 520, the quantum state sent is detected and measured by the "USD measurement device" 120 that implements a USD measurement. In a third step 530, the state is measured and, the "USD measurement device" 120 returns a ternary output b; output b=0 or b=1 indicates that the emitted state was conclusive, while b = 0 represents an inconclusive result. Once the state is detected and measured by the "USD measurement device" 120, the value of the output bit stored and the detection is counted as an event and added to the statistics in a further step 540. The stored output is added to the output stream. If output stream size is bigger than N, with N being an output stream size with sufficient statistical event then the apparatus proceeds with the entropy estimation 550 and randomness extraction process 560.

Otherwise, another input bit x is generated, and the corresponding state is prepared and sent by the "non-orthogonal state preparation device" 110 and another 510 to 540 step cycle is achieved. The last step 560 consists in randomness extraction procedure, which provides a final random output bit stream with entropy close to one for each bit.

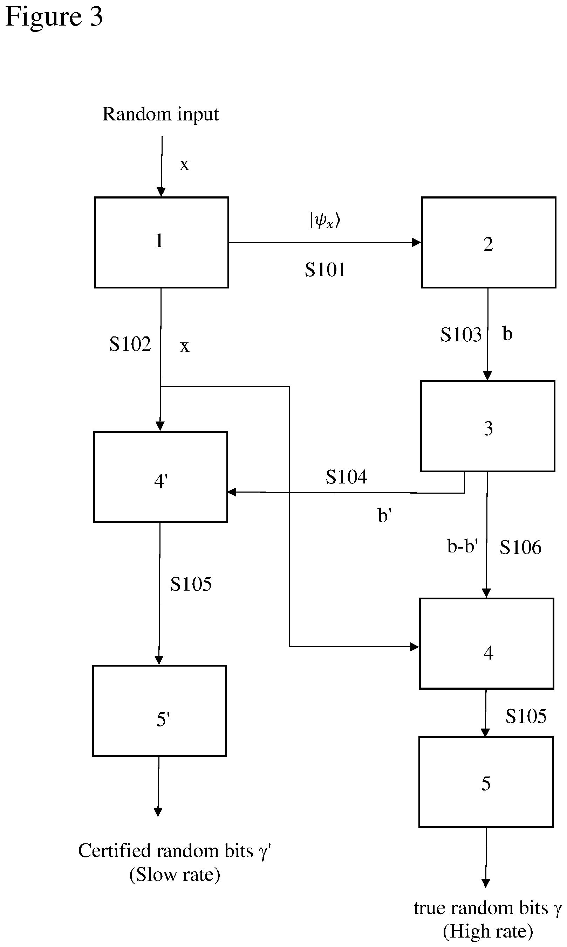

Figure 3 is a detailed description of the method and the apparatus associated to the invention. As we can see, the first steps S101 and S102 are quite similar to the ones described in figure.2.

More particularly, in the first step S101 an emitting device 1, preferably a non-orthogonal state preparation device, is triggered by a random input bit x and adapted to generate and send a stream of one of two possible non-orthogonal quantum states $|\psi_x\rangle$ determined by a plurality of said input bit x at a rate in the range of Mb/s up to 10 Gb/s, also called raw rate.

This quantum state refers to one degree of freedom of the emitted system. For instance, $|\psi_x\rangle$ may represent the state of polarization of photons, a temporal mode of photons, or the phase of a weak coherent state.

Preferably, the two possible non-orthogonal quantum states are encoded in one of the temporal mode of photons, the polarization of photons, the frequency mode of photons, the photon number degree of freedom of light, the spatial mode of photons, the path degree of freedom of photons, or the phase of weak coherent pulses. Furthermore, the two possible non-orthogonal quantum states can be encoded using a combination of two or more encodings listed above or using other quantum systems such as atomic systems and superconducting systems.

In addition, the emitting device 1 also transfers, in step S102, the random input bit x to a processing device 4' (and 4) in order to compare the output of the receiver (Bob) with the input of the emitter (Alice) and calculate the entropy on that basis. In this context, Bob comprises the measurement device 2 and the random selection device 3 while Alice comprises the emitting device 1.

In a second step S103, the quantum state sent is detected and measured by a measurement device 2 adapted to detect each quantum state of the stream of quantum states $|\psi_x\rangle$ and to generate an output b (b=0 or b=1).

Since the two incoming quantum states are non-orthogonal, the outputs b=0 and b=1 do not correspond perfectly to the input states 0 and 1. Random errors appear, which can be used to generate random numbers.

If the state is measured by an USD measurement device, the output b may have different three values: output b=0 or b=1 indicates that the emitted state was state 0 or state 1 (in other words the result is conclusive), while $b = \emptyset$ represents an inconclusive result (one cannot say which state has been sent). Therefore, in this second step S103, either the measurement device 2 can output a conclusive or an inconclusive result. The appearances of inconclusive and conclusive results are random and can be used to generate random numbers.

Once this output b is prepared, it is sent to a random selection device 3. This random selection device 3 carries out a random selection using a pseudorandom number generator.

The random selection device 3 is adapted to divide (or separate) the output b into two fractions. More particularly, the random selection device 3 randomly selects and pick out a first fraction of the bits b to form a first group of bits b' and sends this group (or fraction) through step S104, to the processing device 4' for an entropy estimation and sends, through step S106, the remaining group (or second fraction) b-b' to a processing device 4 for an entropy estimation.

The processing devices 4' and 4, respectively, which receive the input x from the emitting device 1 and the output b' and b-b', respectively, from random selection device 3 over a certain number of rounds N, estimate the entropy $H^Q_{\min}$ of the output b' for each quantum state of the stream of quantum states and the entropy $H^Q_{\min}$ of the output b-b' for each quantum state of the stream of quantum states . Preferably, the processing device estimates the probabilities p(b'|x) representing the probability of observing output b' for a state preparation x and estimates the entropy $H^Q_{\min}$ of the output b', and analogously for p (b-b'|x).

Once the entropy has been estimated, the extraction is carried out. The device therefore comprises at least two randomness extraction devices 5 and 5' which have been prepared for a given extraction ratio. If the estimated entropy $H^Q_{\min}$ is higher than this fraction, then one can proceed to the extraction step (S105). If not then, the process is aborted and repeated.

Alternatively, it is possible that different extraction devices with different extraction ratios are be prepared and used according to the measured entropy. Therefore, if the estimated entropy is not higher than a given threshold it may proceed further with a different extractor.

This permits to obtain a device carrying out a hybrid extraction protocol comprising two parallel randomness extraction devices, i.e. a slow extractor 5' and a fast extractor 5, generating two final random output bit strings. A first one via the first "slow" extractor (5') with block sizes in the range of 10^5-10^7 bits and generating a string of certified random bits r' at a rate in the order of 1 Mb/s; and a second one via the "fast" extractor (b) with block sizes in the range of $2^8$-$2^{10}$ bits and generating a string of certified random bits r' at a rate in the order of 100 Mb/s. (limited by $H_{\min}$ times raw rate b).

Of course, if preferred, it is also possible to use the two fast and slow extractors not in parallel, but one or the other depending on the actual need of rate and quality of the random numbers.

Preferably, the randomness extractors 5' and 5 are realized by a vector-matrix multiplication between a vector formed by the raw bit value generated at the output of the measurement device and a random matrix M where the dimension is adapted as a function of the quantity of entropy $H_{\min}^{Q}$ estimated.

According to a preferred embodiment, the entropy estimation is made according to

$$H_{\min}^{Q} = -\log_2(p_g)$$

, where the guessing probability $p_g$ can be upper bounded from the probabilities p(b|x) as follows: $p_g = \Sigma_{x,b} \, v_{x,b} p(b|x) + \gamma$, where the parameter $v_{xb}$ and $\gamma$ are obtained via an adapted semi-definite program (SDP).

The invention also relates to a quantum Key Distribution System comprising at least one Quantum Random Number Generator defined above.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses, types of states, raw rate and size of blocks which can be used.

**Claims**

1. Quantum Random Number Generator comprising

   an emitting device (1) adapted to be triggered by a signal representing an input bit x and adapted to generate and send a stream of one of two possible non-orthogonal quantum states determined by a plurality of said input bits x at a rate in the range of Mb/s up to 10 Gb/s,
   a measurement device (2) adapted to detect each quantum state of the stream of quantum states sent by the emitting device (1) and to generate an output b based on the detected quantum state,
   a random selection device (3) adapted to receive said output b and carries out a random selection on said output b so as to select and pick out a first bit fraction b' of the output b and a second bit fraction b-b' of the output b sent to an entropy $H_{\min}^{Q}$ estimation module (4, 4'),
   wherein the entropy $H_{\min}^{Q}$ estimation module (4, 4') is adapted to receive the input x, the output fraction b' and the output fraction b-b' over a certain number of rounds N and to estimate the entropy $H_{\min}^{Q}$ of each output for each quantum state of the stream of quantum states, validating or not an extraction ratio, and
   at least two parallel randomness extraction devices (5, 5') adapted to carry out a hybrid extraction protocol generating two final random output bit strings via
   a first extractor (5') adapted to extract the first bit fraction b' with bit block sizes in a first range and generate a string of certified random bits r' at a first rate; and
   a second extractor (5) adapted to extract the second bit fraction b-b' with bit block sizes in a second range, lower than the first range, and generate a string of true random bits r at a second rate, higher than the first rate.

2. Quantum Random Number Generator according to claim 1, **characterized in that** the first extractor is a "slow" extractor (5') which extracts the first bit fraction b' with block sizes in the range of 10^5-10^7 bits and generates a string of certified random bits r' at a rate in the order of 1 Mb/s; and the second extractor is a "fast" extractor (5) which extracts the second bit fraction b-b' with block sizes in the range of $2^8$-$2^{10}$ bits and generating a string of true random bits r at a rate in the order of 100 Mb/s.

3. Quantum Random Number Generator according to claim 1 or 2, **characterized in that** the measurement device is an unambiguous state discrimination measurement, where the output b represents whether the quantum state has been identified or not and, if it has been identified, which quantum state among the two possible quantum states to a processing device.

4. Quantum Random Number Generator according to any one of claims 1 to 3, **characterized in that** the entropy $H_{\min}^{Q}$ estimation module comprises a first processing device (4') adapted to estimates the entropy $H_{\min}^{Q}$ of the output fraction b' and a second processing device (4) adapted to estimates the entropy $H_{\min}^{Q}$ of the output fraction b-b'.

5. Quantum Random Number Generator according to claim 4, **characterized in that** the processing devices (4', 4) estimate the probabilities p(b'|x) and p(b-b'|x) representing the probability of observing output fractions b' and b-b' for an input bit x and estimates

the entropy $H^Q_{\min}$ of the output fractions b' and b-b'.

6. Quantum Random Number Generator according to any one of claims 1 to 5, **characterized in that** the two possible non-orthogonal quantum states are encoded in one of the temporal mode of photons, the polarization of photons, the frequency mode of photons, the photon number degree of freedom of light, the spatial mode of photons, the path degree of freedom of photons, or the phase of weak coherent pulses.

7. Quantum Random Number Generator according to any one of claims 1 to 6, **characterized in that** the two possible non-orthogonal quantum states are encoded using a combination of two or more encodings listed in claim 6, or using other quantum systems such as atomic systems and superconducting systems.

8. Quantum Random Number Generator according to any one of claims 1 to 7, **characterized in that** the random selection device (3) carries out the random selection using a pseudorandom number generator.

9. Quantum Random Number Generator according to any one of claims 1 to 8, **characterized in that** the raw key is 0 if the output b is conclusive or 1 if the output b is inconclusive.

10. Quantum Random Number Generator according to any one of claims 1 to 9, **characterized in that** the entropy estimation is made according to

$$H^Q_{\min} = -\log_2(p_g)$$

, where the guessing probability $p_g$ can be upper bounded from the probabilities p(b|x) as follows: $p_g = \Sigma_{x,b}\, v_{x,b}p(b|x) + \gamma$, where the parameter $v_{x,b}$ and $\gamma$ are obtained via an adapted semi-definite program (SDP).

11. Quantum Random Number Generator according to any one of claims 1 to 10, **characterized in that** the randomness extraction is realized by a vector-matrix multiplication between a vector formed by the raw bit value generated at the output of the unambiguous quantum state discrimination measurement device and a random matrix M where the dimension is adapted as a function of the quantity of entropy $H^Q_{\min}$ estimated (140).

12. Quantum Key Distribution System comprising at least one Quantum Random Number Generator of any one of preceding claims.

13. Self-testing method carried out by a Quantum Random Number Generator comprising the steps of:

preparing and sending (S101, S102) a stream of one of two possible non-orthogonal quantum states determined by a plurality of input bits x at a rate in the range of Mb/s up to 10 Gb/s,
detecting and measuring (520) each quantum state of the stream of quantum states sent and generating an output b based on the detected quantum state,
carrying out a random selection (S104, S106) on the output b so as to select and pick out a first bit fraction b' of the output b and a second bit fraction b-b' of the output b sent to an entropy estimation module (4', 4),
estimating (550) the entropy $H^Q_{\min}$ of each the output fraction b' and the output fraction b-b' for each quantum state of the stream of quantum states and validating or not an extraction ratio, and
randomness extracting (560) via two parallel randomness extraction procedures adapted to carry out a hybrid extraction protocol generating two final random output bit strings via
a first extraction (5) which extracts the first bit fraction b' with bit block sizes in a first range and generates a string of certified random bits r' at a first rate; and
a second extraction (5') which extracts the second bit fraction b-b' with bit block sizes in a second range, lower than the first range, and generates a string of true random bits r at a second rate, higher than the first rate.

14. Self-testing method according to claim 13, **characterized in that** the first extraction is a "slow" extraction (5') which extracts the first bit fraction b' with block sizes in the range of 10^5-10^7 bits and generates a string of certified random bits r' at a rate in the order of 1 Mb/s; and
the second extraction is a "fast" extraction (5') which extracts the second bit fraction b-b' with block sizes in the range of $2^8$-$2^{10}$ bits and generating a string of true random bits r at a rate in the order of 100 Mb/s.

15. Self-testing method according to claim 13 or 14, **characterized in that** the preparation device prepares and sends a physical system prepare in any number of non-orthogonal quantum states and the measurement device consists in an adapted unambiguous state discrimination measurement.

**Patentansprüche**

1. Quantenzufallszahlengenerator, umfassend:

eine Sendevorrichtung (1), die dazu ausgelegt ist, durch ein Signal ausgelöst zu werden, das ein Eingangsbit x darstellt, und dazu ausgelegt ist, einen Strom eines von zwei möglichen nicht orthogonalen Quantenzuständen, die durch eine Mehrzahl der Eingangsbits x bestimmt werden, mit einer Rate im Bereich von Mbit/s bis zu 10 Gbit/s zu erzeugen und zu senden,

eine Messvorrichtung (2), die dazu ausgelegt ist, jeden Quantenzustand des von der Sendevorrichtung (1) gesendeten Stroms von Quantenzuständen zu erkennen und eine Ausgabe b basierend auf dem erkannten Quantenzustand zu erzeugen,

eine Zufallsauswahlvorrichtung (3), die dazu ausgelegt ist, die Ausgabe b zu empfangen und eine Zufallsauswahl an der Ausgabe b durchzuführen, um eine erste Bitfraktion b' der Ausgabe b und eine zweite Bitfraktion b - b' der Ausgabe b auszuwählen und auszusuchen, die an ein Modul (4, 4') zum Schätzen der Entropie $H_{min}^{Q}$ gesendet werden,

wobei das Modul (4, 4') zum Schätzen der Entropie $H_{min}^{Q}$ dazu ausgelegt ist, die Eingabe x, die Ausgabefraktion b' und die Ausgabefraktion b - b' über eine bestimmte Anzahl von Runden N zu empfangen und die Entropie $H_{min}^{Q}$ jeder Ausgabe für jeden Quantenzustand des Stroms von Quantenzuständen zu schätzen, wobei ein Extraktionsverhältnis validiert wird oder nicht, und

mindestens zwei Vorrichtungen (5, 5') zur parallelen Zufälligkeitsextraktion, die dazu ausgelegt sind, ein hybrides Extraktionsprotokoll auszuführen, das zwei endgültige Zufallsausgabebitfolgen erzeugt durch

einen ersten Extraktor (5'), der dazu ausgelegt ist, die erste Bitfraktion b' mit Bitblockgrößen in einem ersten Bereich zu extrahieren und eine Folge zertifizierter Zufallsbits r' mit einer ersten Rate zu erzeugen; und

einen zweiten Extraktor (5), der dazu ausgelegt ist, die zweite Bitfraktion b - b' mit Bitblockgrößen in einem zweiten Bereich zu extrahieren, der niedriger als der erste Bereich ist, und eine Folge von echten Zufallsbits r mit einer zweiten Rate zu erzeugen, die höher als die erste Rate ist.

2. Quantenzufallszahlengenerator nach Anspruch 1, **dadurch gekennzeichnet, dass** der erste Extraktor ein "langsamer" Extraktor (5') ist, der die erste Bitfraktion b' mit Blockgrößen in einem Bereich von 10^5 bis 10^7 Bits extrahiert und eine Folge von zertifizierten Zufallsbits r' mit einer Rate in der Größenordnung von 1 Mbit/s erzeugt; und der zweite Extraktor ein "schneller" Extraktor (5) ist, der die zweite Bitfraktion b - b' mit Blockgrößen im Bereich von $2^8$ bis $2^{10}$ Bits extrahiert und eine Folge von echten Zufallsbits r mit einer Rate in der Größenordnung von 100 Mbit/s erzeugt.

3. Quantenzufallszahlengenerator nach Anspruch 1 oder 2, **dadurch gekennzeichnet, dass** die Messvorrichtung eine Messung einer eindeutigen Zustandsunterscheidung ist, wobei die Ausgabe b darstellt, ob der Quantenzustand identifiziert wurde oder nicht, und, wenn er identifiziert wurde, welcher Quantenzustand unter den zwei möglichen Quantenzuständen an eine Verarbeitungsvorrichtung.

4. Quantenzufallszahlengenerator nach einem der Ansprüche 1 bis 3, **dadurch gekennzeichnet, dass** das Modul zum Schätzen der Entropie $H_{min}^{Q}$ eine erste Verarbeitungsvorrichtung (4'), die zum Schätzen der Entropie $H_{min}^{Q}$ der Ausgabefraktion b' ausgelegt ist, und eine zweite Verarbeitungsvorrichtung (4) umfasst, die zum Schätzen der Entropie $H_{min}^{Q}$ der Ausgabefraktion b - b' ausgelegt ist.

5. Quantenzufallszahlengenerator nach Anspruch 4, **dadurch gekennzeichnet, dass** die Verarbeitungsvorrichtungen (4', 4) die Wahrscheinlichkeiten p(b'|x) und p(b - b'|x) schätzen, die die Wahrscheinlichkeit einer Beobachtung der Ausgabefraktionen b' und b - b' für ein Eingangsbit x darstellen, und die Entropie $H_{min}^{Q}$ der Ausgabefraktionen b' und b - b' schätzen.

6. Quantenzufallszahlengenerator nach einem der Ansprüche 1 bis 5, **dadurch gekennzeichnet, dass** die zwei möglichen nicht orthogonalen Quantenzustände in einem von dem zeitlichen Modus von Photonen, der Polarisation von Photonen, dem Frequenzmodus von Photonen, dem Photonenanzahl-Freiheitsgrad von Licht, dem räumlichen Modus von Photonen, dem Pfadfreiheitsgrad von Photonen oder der Phase von schwachen kohärenten Impulsen codiert sind.

7. Quantenzufallszahlengenerator nach einem der Ansprüche 1 bis 6, **dadurch gekennzeichnet, dass** die zwei möglichen nicht orthogonalen Quantenzustände unter Verwendung einer Kombination aus zwei oder mehr der in Anspruch 6 aufgeführten Codierungen oder unter Verwendung anderer Quan-

tensysteme wie Atomsystemen und supraleitenden Systemen codiert sind.

8. Quantenzufallszahlengenerator nach einem der Ansprüche 1 bis 7, **dadurch gekennzeichnet, dass** die Zufallsauswahlvorrichtung (3) die Zufallsauswahl unter Verwendung eines Pseudozufallszahlengenerators durchführt.

9. Quantenzufallszahlengenerator nach einem der Ansprüche 1 bis 8, **dadurch gekennzeichnet, dass** der Rohschlüssel, wenn die Ausgabe *b* schlüssig ist, 0 oder, wenn die Ausgabe *b* nicht schlüssig ist, 1 ist.

10. Quantenzufallszahlengenerator nach einem der Ansprüche 1 bis 9, **dadurch gekennzeichnet, dass** die Entropieschätzung gemäß

$$H_{min}^{Q} = -log_2(p_g)$$

erfolgt, wobei die Erratewahrscheinlichkeit $p_g$ aus den Wahrscheinlichkeiten $p(b|x)$ nach oben begrenzt werden kann, wie folgt: $p_g = \Sigma_{x,b} \, v_{x,b} p(b|x) + \gamma$, wobei die Parameter $v_{x,b}$ und $\gamma$ durch ein angepasstes semidefinites Programm (SDP) erhalten werden.

11. Quantenzufallszahlengenerator nach einem der Ansprüche 1 bis 10, **dadurch gekennzeichnet, dass** die Zufälligkeitsextraktion durch eine Vektor-Matrix-Multiplikation zwischen einem Vektor, der durch den Rohbitwert gebildet wird, der am Ausgang der Vorrichtung zur Messung der eindeutigen Quantenzustandsunterscheidung erzeugt wird, und einer Zufallsmatrix M realisiert wird, wobei die Dimension als eine Funktion der geschätzten Menge der Entropie $H_{min}^{Q}$ (140) angepasst wird.

12. Quantenschlüsselverteilungssystem, umfassend mindestens einen Quantenzufallszahlengenerator nach einem der vorhergehenden Ansprüche.

13. Selbsttestverfahren, das von einem Quantenzufallszahlengenerator durchgeführt wird und die folgenden Schritte umfasst:

Vorbereiten und Senden (S101, S102) eines Stroms eines von zwei möglichen nicht orthogonalen Quantenzuständen, die durch eine Mehrzahl der Eingangsbits x bestimmt werden, mit einer Rate im Bereich von Mbit/s bis zu 10 Gbit/s,
Erkennen und Messen (520) jedes Quantenzustands des gesendeten Stroms von Quantenzuständen und Erzeugen einer Ausgabe *b* basierend auf dem erkannten Quantenzustand,
Durchführen einer Zufallsauswahl (S104, S196) an der Ausgabe *b,* um eine erste Bitfraktion *b'* der Ausgabe *b* und eine zweite Bitfraktion *b - b'* der Ausgabe *b* auszuwählen und auszusuchen, die an ein Entropieschätzmodul (4, 4') gesendet werden,

Schätzen (550) der Entropie $H_{min}^{Q}$ jeder der Ausgabefraktion *b'* und der Ausgabefraktion *b - b'* für jeden Quantenzustand des Stroms von Quantenzuständen und Validieren eines Extraktionsverhältnisses oder nicht, und Zufälligkeitsextrahieren (560) durch zwei parallele Zufälligkeitsextraktionsprozeduren, die dazu ausgelegt sind, ein hybrides Extraktionsprotokoll auszuführen, das zwei endgültige Zufallsausgabebitfolgen erzeugt durch
eine erste Extraktion (5'), die die erste Bitfraktion *b'* mit Bitblockgrößen in einem ersten Bereich extrahiert und eine Folge zertifizierter Zufallsbits *r'* mit einer ersten Rate erzeugt; und
eine zweite Extraktion (5), die die zweite Bitfraktion *b-b'* mit Bitblockgrößen in einem zweiten Bereich extrahiert, der niedriger als der erste Bereich ist, und eine Folge von echten Zufallsbits *r* mit einer zweiten Rate zu erzeugt, die höher als die erste Rate ist.

14. Selbsttestverfahren nach Anspruch 13, **dadurch gekennzeichnet, dass** die erste Extraktion eine "langsame" Extraktion (5') ist, die die erste Bitfraktion *b'* mit Blockgrößen in einem Bereich von 10^5 bis 10^7 Bits extrahiert und eine Folge von zertifizierten Zufallsbits *r'* mit einer Rate in der Größenordnung von 1 Mbit/s erzeugt; und
die zweite Extraktion eine "schnelle" Extraktion (5) ist, die die zweite Bitfraktion *b - b'* mit Blockgrößen im Bereich von $2^8$ bis $2^{10}$ Bits extrahiert und eine Folge von echten Zufallsbits *r* mit einer Rate von 100 Mbit/s erzeugt.

15. Selbsttestverfahren nach Anspruch 13 oder 14, **dadurch gekennzeichnet, dass** die Vorbereitungsvorrichtung ein physikalisches System in einer beliebigen Anzahl nicht orthogonaler Quantenzustände vorbereitet und sendet und die Messvorrichtung aus einer angepassten Messung einer eindeutigen Zustandsunterscheidung besteht.

**Revendications**

1. Générateur de Nombres Aléatoires Quantiques comprenant

un dispositif émetteur (1) adapté pour être déclenché par un signal représentant un bit d'entrée x et adapté pour générer et envoyer un flux de l'un de deux états quantiques non orthogonaux possibles déterminés par une pluralité desdits bits d'entrée x à un débit dans la plage allant de Mb/s jusqu'à 10 Gb/s,

un dispositif de mesure (2) adapté pour détecter chaque état quantique du flux d'états quantiques envoyé par le dispositif émetteur (1) et pour générer une sortie b sur la base de l'état quantique détecté,

un dispositif de sélection aléatoire (3) adapté pour recevoir ladite sortie b et réalise une sélection aléatoire sur ladite sortie b de manière à sélectionner et prélever une première fraction binaire b' de la sortie b et une seconde fraction binaire b-b' de la sortie b envoyées à un module d'estimation d'entropie $H_{min}^Q$ (4, 4'),

dans lequel le module d'estimation d'entropie

$H_{min}^Q$ (4, 4') est adapté pour recevoir l'entrée x, la fraction de sortie b' et la fraction de sortie b-b' sur un certain nombre de cycles N et pour estimer l'entropie $H_{min}^Q$ de chaque sortie pour chaque état quantique du flux d'états quantiques, validant ou non un taux d'extraction, et au moins deux dispositifs d'extraction aléatoire parallèles (5, 5') adaptés pour réaliser un protocole d'extraction hybride générant deux chaînes binaires de sortie aléatoires finales via

un premier extracteur (5') adapté pour extraire la première fraction binaire b' avec des tailles de blocs binaires dans une première plage et générer une chaîne de bits aléatoires certifiés r' à un premier débit ; et

un second extracteur (5) adapté pour extraire la seconde fraction binaire b-b' avec des tailles de blocs binaires dans une seconde plage, inférieure à la première plage, et générer une chaîne de vrais bits aléatoires r à un second débit, supérieur au premier débit.

2. Générateur de Nombres Aléatoires Quantiques selon la revendication 1, **caractérisé en ce que** le premier extracteur est un extracteur « lent » (5') qui extrait la première fraction binaire b' avec des tailles de blocs dans la plage allant de 10^5 à 10^7 bits et génère une chaîne de bits aléatoires certifiés r' à un débit de l'ordre de 1 Mb/s ; et le second extracteur est un extracteur « rapide » (5) qui extrait la seconde fraction binaire b-b' avec des tailles de blocs dans la plage allant de $2^8$ à $2^{10}$ bits et génère une chaîne de vrais bits aléatoires r à un débit de l'ordre de 100 Mb/s.

3. Générateur de Nombres Aléatoires Quantiques selon la revendication 1 ou 2, **caractérisé en ce que** le dispositif de mesure est une mesure de discrimination d'état non ambiguë, où la sortie b représente si l'état quantique a été identifié ou non et, s'il a été identifié, quel état quantique parmi les deux états quantiques possibles à un dispositif de traitement.

4. Générateur de Nombres Aléatoires Quantiques selon l'une quelconque des revendications 1 à 3, **caractérisé en ce que** le module d'estimation d'entropie $H_{min}^Q$ comprend un premier dispositif de traitement (4') adapté pour estimer l'entropie $H_{min}^Q$ de la fraction de sortie b' et un second dispositif de traitement (4) adapté pour estimer l'entropie $H_{min}^Q$ de la fraction de sortie b-b'.

5. Générateur de Nombres Aléatoires Quantiques selon la revendication 4, **caractérisé en ce que** les dispositifs de traitement (4', 4) estiment les probabilités $p(b'|x)$ et $p(b - b'|x)$ représentant la probabilité d'observer les fractions de sortie b' et b-b' pour un bit d'entrée x et estiment l'entropie $H_{min}^Q$ des fractions de sortie b' et b-b' .

6. Générateur de Nombres Aléatoires Quantiques selon l'une quelconque des revendications 1 à 5, **caractérisé en ce que** les deux états quantiques non orthogonaux possibles sont codés dans l'un du mode temporel des photons, de la polarisation des photons, du mode fréquentiel des photons, du degré de liberté de nombre de photons de la lumière, du mode spatial des photons, du degré de liberté de trajet des photons ou de la phase des impulsions cohérentes faibles.

7. Générateur de Nombres Aléatoires Quantiques selon l'une quelconque des revendications 1 à 6, **caractérisé en ce que** les deux états quantiques non orthogonaux possibles sont codés en utilisant une combinaison de deux codages ou plus listés dans la revendication 6, ou en utilisant d'autres systèmes quantiques tels que des systèmes atomiques et des systèmes supraconducteurs.

8. Générateur de Nombres Aléatoires Quantiques selon l'une quelconque des revendications 1 à 7, **caractérisé en ce que** le dispositif de sélection aléatoire (3) réalise la sélection aléatoire en utilisant un générateur de nombres pseudo-aléatoires.

9. Générateur de Nombres Aléatoires Quantiques selon l'une quelconque des revendications 1 à 8, **caractérisé en ce que** la clé brute est 0 si la sortie b est concluante ou 1 si la sortie b n'est pas concluan-

**10.** Générateur de Nombres Aléatoires Quantiques selon l'une quelconque des revendications 1 à 9, **caractérisé en ce que** l'estimation d'entropie est faite

selon $H^Q_{min} = -log_2(p_g)$, où la probabilité de deviner $p_g$ peut être majorée à partir des probabilités $p(b|x)$ comme suit : $p_g = \Sigma_{x,b}v_{x,b}p(b|x) + \gamma$, où les paramètres $v_{x,b}$, et $\gamma$ sont obtenus via un programme semi-défini adapté (SDP).

**11.** Générateur de Nombres Aléatoires Quantiques selon l'une quelconque des revendications 1 à 10, **caractérisé en ce que** l'extraction aléatoire est réalisée par une multiplication vecteur-matrice entre un vecteur formé par la valeur binaire brute générée à la sortie du dispositif de mesure de discrimination d'état quantique non ambiguë et une matrice aléatoire M où la dimension est adaptée en fonction de la quantité d'entropie $H^Q_{min}$ estimée (140).

**12.** Système de Distribution de Clés Quantiques comprenant au moins un Générateur de Nombres Aléatoires Quantiques de l'une quelconque des revendications précédentes.

**13.** Procédé d'autotest réalisé par un Générateur de Nombres Aléatoires Quantiques comprenant les étapes de :

préparation et envoi (S101, S102) d'un flux de l'un de deux états quantiques non orthogonaux possibles déterminés par une pluralité de bits d'entrée x à un débit dans la plage allant de Mb/s jusqu'à 10 Gb/s,
détection et mesure (520) de chaque état quantique du flux d'états quantiques envoyé et génération d'une sortie b sur la base de l'état quantique détecté,
réalisation d'une sélection aléatoire (S104, S106) sur la sortie b de manière à sélectionner et prélever une première fraction binaire b' de la sortie b et une seconde fraction binaire b-b' de la sortie b envoyées à un module d'estimation d'entropie (4', 4),

estimation (550) de l'entropie $H^Q_{min}$ de chacune de la fraction de sortie b' et de la fraction de sortie b-b' pour chaque état quantique du flux d'états quantiques et validation ou non d'un taux d'extraction, et
extraction aléatoire (560) via deux procédures d'extraction aléatoire parallèles adaptées pour réaliser un protocole d'extraction hybride générant deux chaînes binaires de sortie aléatoires finales via

une première extraction (5) qui extrait la première fraction binaire b' avec des tailles de blocs binaires dans une première plage et génère une chaîne de bits aléatoires certifiés r' à un premier débit ; et
une seconde extraction (5) qui extrait la seconde fraction binaire b-b' avec des tailles de blocs binaires dans une seconde plage, inférieure à la première plage, et génère une chaîne de vrais bits aléatoires r à un second débit, supérieur au premier débit.

**14.** Procédé d'autotest selon la revendication 13, **caractérisé en ce que** la première extraction est une extraction « lente » (5') qui extrait la première fraction binaire b' avec des tailles de blocs dans la plage allant de 10^5 à 10^7 bits et génère une chaîne de bits aléatoires certifiés r' à un débit de l'ordre de 1 Mb/s ; et
la seconde extraction est une extraction « rapide » (5') qui extrait la seconde fraction binaire b-b' avec des tailles de blocs dans la plage allant de $2^8$ à $2^{10}$ bits et génère une chaîne de vrais bits aléatoires r à un débit de l'ordre de 100 Mb/s.

**15.** Procédé d'autotest selon la revendication 13 ou 14, **caractérisé en ce que** le dispositif de préparation prépare et envoie un système physique préparé dans un nombre quelconque d'états quantiques non orthogonaux et le dispositif de mesure consiste en une mesure de discrimination d'état adaptée et non ambiguë.

Figure 1 – Prior Art

$$x = \{0, 1\}$$

$$|\psi_x\rangle$$

| NON-ORTHOGONAL STATE PREPARATION DEVICE (110) | USD MEASUREMENT DEVICE (120) |

(130)

$$b = \{0, 1, \varnothing\}$$

$x$

| PROCESSING DEVICE ENTROPY ESTIMATION (140) |

| RANDOMNESS EXTRACTRACTION (150) |

# Figure 2 – Prior Art

(510)

PREPARE AND SEND NON-ORTHOGONAL STATES

(520)

DETECT STATES

DISTINCTION WITHOUT ERROR

INCONCLUSIVE RESULT

(530)

$b = 0, 1$

$b = \emptyset$

(540)

STORE OUTPUT

(550)

LENGTH OF STORED OUTPUT STREAM < N

**No**

ENTROPY ESTIMATION

**Yes**

(560)

RANDOMNESS EXTRACTION

# Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6831980 B
- US 6215874 B
- WO 2013003943 A
- EP 1821196 A
- WO 0195091 A
- US 6393448 B, W. Dultz and E. Hildebrandt
- US 7284024 B

- US 2012045053 A
- JP 2009070009 A
- EP 2592547 A
- GB 2473078 A
- WO 02091147 A
- EP 3306464 A1

**Non-patent literature cited in the description**

- **A.K. LENSTRA.** Ron was wrong, whit is right. *Cryptology ePrint Archive,* 2012
- **L. DORRENDORF ; Z. GUTTERMAN ; B. PINKAS.** Cryptanalysis of the random number generator of the windows operating system. *ACM Trans. Inf. Syst. Secur.,* 2009, vol. 13 (1), 1-32
- **L.BELLO.** openssl - predictable random number generator. *Debian security advisory,* 2008, 1571-1
- **BUSHING ; MARCAN ; SEGHER ; SVEN.** Ps3 epic fail. *27th Chaos Communication Congress,* 2010
- **R. CHIRGWIN.** Android bug batters bitcoin wallets. *The Register,* 2013
- **C. H. VINCENT.** The generation of truly random binary numbers. *Journal of Physics E: Scientific Instruments,* 1970, vol. 3 (8), 594
- **Y. SAITOH ; J. HORI ; T. KIRYU.** Generation of physical random number using frequency-modulated oscillation circuit with shot noise. *Electron Comm. Jpn,* 2005, vol. 88 (5), 12-19
- **M. HAMBURG ; P. KOCHER ; M.E. MARSON.** Analysis of Intel's IVY bridge digital random number generator. Cryptography research Inc
- **J. G. RARITY ; P. C. M. OWENS ; P. R. TAPSTER.** Quantum random-number generation and key sharing. *J.Mod.Opt.,* 1994, vol. 41 (12), 2435-2444
- **A. STEFANOV ; N. GISIN ; O. GUINNARD ; L. GUINNARD ; H. ZBINDEN.** Optical quantum random number generator. *J.Mod.Opt.,* 2000, vol. 47 (4), 595-598

- **W. WEI ; H. GUO.** Bias-free true random-number generator. *Opt. Letters,* 2009, vol. 34 (12), 1876-1878
- **C. GABRIEL.** A generator for unique quantum random numbers based on vacuum states. *Nature Phot.,* 2010, vol. 4 (10), 711-715
- **T. LUNGHI.** Self-Testing Quantum Random Number Generator. *Phys.Rev.Lett.,* 2015, vol. 114, 150501
- **D.G. MARANGON ; G. VALLONE ; P. VILLORESI.** Source-device-independent Ultra-fast Quantum Random Number Generation. *arXiv 1509.07390,* 2015
- **RUSCA D ; TEBYANIAN H ; MARTIN AC ; ZBINDEN H.** Fast self-testing quantum random number generator based on homodyne detection. *Appl Phys Lett,* 2020, vol. 116 (264004), 1-5
- **RUSCA D ; VAN HIMBEECK T ; MARTIN A ; BRASK JB ; SHI W ; PIRONIO S et al.** Self-testing quantum random-number generator based on an energy bound. *Physical Review. A,* 2019, vol. 100, 062338
- **BRASK J ; MARTIN A ; ESPOSITO W ; HOULMANN R ; BOWLES J ; ZBINDEN H et al.** Megahertz-Rate Semi-Device-Independent Quantum Random Number Generators Based on Unambiguous State Discrimination. *Physical Review Applied,* 2017, vol. 7 (5), 054018